# EUROPEAN PATENT APPLICATION

(11) **EP 2 051 403 A1**
(43) Date of publication of application: **22.04.2009**
(21) Application number: 06782546.3
(22) Date of filing: 09.08.2006
(51) Int. Cl.: H04B 7/12, H04B 7/26

(54) **WIRELESS TERMINAL**

(71) Applicant: Fujitsu Limited, Kawasaki-shi, Kanagawa 211-8588 (JP)
(72) Inventor: ITOU, Tsutomu, Kawasaki-shi, Kanagawa 211-8588 (JP)
(74) Representative: Holtby, Christopher Lawrence
(86) International application number: PCT/JP2006/315730
(87) International publication number: WO 2008/018127

(57) **Abstract**

A difference from an actual level measurement value, which could be caused by a movement of the wireless terminal, is suppressed.
A wireless terminal has a diversity function and includes a plurality of receiving branches (3a, 3b). Receiving means (1a, 1b) is provided for the plurality of receiving branches (3a, 3b), respectively. The receiving means (1a, 1b) can receive radio signals of a plurality of frequencies. Control means (2) controls in a gap zone in a compressed mode such that the receiving means (1a, 1b) is allowed to receive radio signals of different frequencies.

## Description

### Technical Field

The present invention relates to wireless terminals, and particularly to a wireless terminal which conducts wireless communication with a base station and has a diversity function.

### Background Art

The frequency band that can be assigned to WCDMA (wideband code division multiple access) is not limited to the 2-GHz band, and the 800-MHz band, 1.7-GHz band, 2.5-GHz band, and many other frequency bands are currently assigned in Japan and in foreign countries. Accordingly, some wireless terminals measure levels (radio qualities) such as SIR (signal-to-interface power ratio) of a plurality of signals of different frequencies. Some other wireless terminals support a plurality of communication systems such as WCDMA and GSM (global system for mobile) and makes handover between the different communication systems.

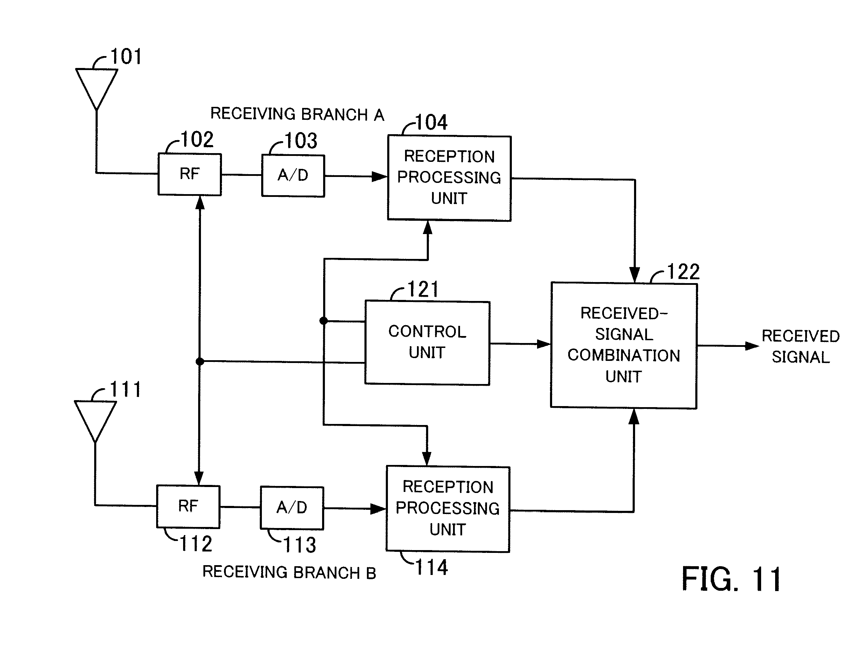

FIG. 11 is a block diagram showing the configuration of a wireless terminal having a conventional diversity function. As shown in FIG. 11, the wireless terminal includes antennas 101 and 111, RFs (radio frequency units) 102 and 112, A/Ds (analog-to-digital converters) 103 and 113, reception processing units 104 and 114, a control unit 121, and a received-signal combination unit 122.

A combination of the antenna 101, the RF 102, the A/D 103, and the reception processing unit 104 is referred to as a receiving branch A. A combination of the antenna 111, the RF 112, the A/D 113, and the reception processing unit 114 is referred to as a receiving branch B. The wireless terminal combines signals of the receiving branch A and the receiving branch B to obtain a signal with a high quality (diversity function).

The RFs 102 and 112 receive radio signals having predetermined frequencies among radio signals received by the antennas 101 and 111.

The A/Ds 103 and 113 convert the analog radio signal received by the RFs to digital signals.

The reception processing units 104 and 114 perform reception processing (demodulation) for the signals output from the A/Ds 103 and 113, in accordance with the communication system used in communication between the wireless terminal and the base station. For example, the reception processing units 104 and 114 output received signals that include the measurement result of frame top timing, SIR and other level measurement results, data demodulation results, and the like. If WCDMA is used as the communication system, reception processing for the WCDMA communication system is performed. If GSM is used as the communication system, reception processing for the GSM communication system is performed.

The control unit 121 controls frequencies at which the RFs 102 and 112 receive radio signals. If the wireless terminal receives a 2-GHz-band radio signal, for instance, the control unit 121 controls the RFs 102 and 112 to receive 2-GHz-band radio signals.

The control unit 121 also controls the communication system in which the reception processing units 104 and 114 perform reception processing. For example, if the wireless terminal and the base station communicate by using the WCDMA communication system, the control unit 121 controls the reception processing units 104 and 114 to perform reception processing by the WCDMA communication system.

The received-signal combination unit 122 brings the received signals output from the reception processing units 104 and 114 in phase with each other and combines the signals. The received-signal combination unit 122 combines the received signal of the receiving branch A and the received signal of the receiving branch B to improve the reception sensitivity for the received signal.

The operation of level measurement of the wireless terminal shown in FIG. 11 during a voice call will be described below. During the voice call, the wireless terminal measures levels at different frequencies in different communication systems in a compressed mode. In accordance with the results of level measurement, the wireless terminal communicates with the base station at the optimum frequency or in the optimum communication system.

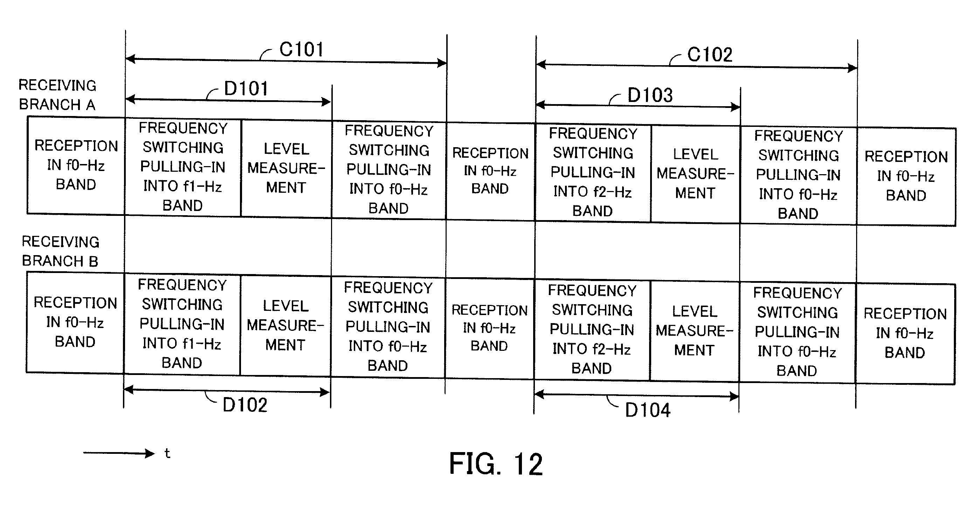

FIG. 12 is a diagram illustrating the operation of level measurement by the wireless terminal. FIG. 12 shows the operation of the wireless terminal in level measurement along the receiving branch A and in level measurement along the receiving branch B. The time axis t points to the right in FIG. 12.

Suppose that the wireless terminal is in communication with the base station in an f0-Hz frequency band. In a gap zone C101 in a compressed mode shown in FIG. 12, the wireless terminal switches receiving frequencies in the receiving branches A and B for level measurement at different frequencies. For example, the control unit 121 switches the receiving frequencies of the RFs 102 and 112 to an f1-Hz frequency band so that f1-Hz-band signals can be received, as shown in FIG. 12.

When pulling-in into the f1-Hz frequency band is completed (when the frequencies of received signals are converged into the f1-Hz frequency band), the wireless terminal performs level measurement in the f1-Hz frequency band.

When the level measurement ends, the control unit 121 switches the frequency band to the f0-Hz frequency band to restore the initial f0-Hz frequency band, as shown in FIG. 12. Then, signals are received in the f0-Hz frequency band. In the next gap zone C102 in the compressed mode, the wireless terminal performs level measurement in an f2-Hz frequency band in the same way.

The conventional wireless terminal performs pulling-in into the same frequency in both receiving branches A and B and performs level measurement in the gap zones C101 and C102 in the compressed mode, as described above. This means that the level measurement of the f1-Hz frequency band is performed along the receiving branches A and B in the gap zone C101 in the compressed mode, as indicated by double-headed arrows D101 and D102 in FIG. 12. In the gap zone C102 in the compressed mode, level measurement of the f2-Hz frequency band is performed along the receiving branches A and B, as indicated by double-headed arrows D103 and D104.

The operation of the wireless terminal in level measurement in the standby state will be described next. Even in the standby state, the wireless terminal performs level measurement at different frequencies in different communication systems in standby level measurement zones.

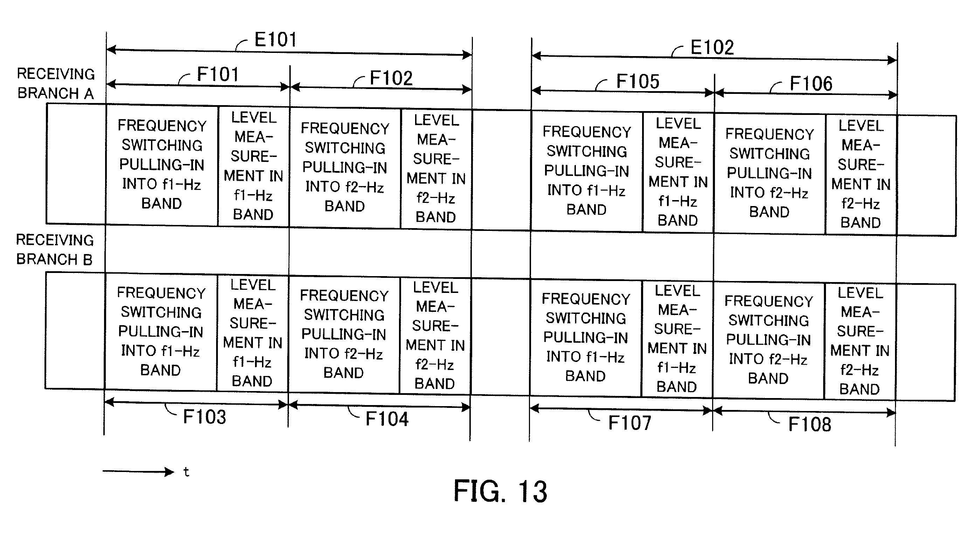

FIG. 13 is a diagram illustrating the operation of the wireless terminal in level measurement in the standby state. The figure shows the operation of the wireless terminal in level measurement along the receiving branch A and in level measurement along the receiving branch B. The time axis t points to the right in FIG. 13.

In a standby level measurement zone E101, the wireless terminal switches the receiving frequency in the receiving branch A and the receiving branch B to perform level measurement at different frequencies, as shown in FIG. 13. For example, the control unit 121 switches the receiving frequencies of the RFs 102 and 112 to the f1-Hz frequency band so that f1-Hz-band signals can be received.

After pulling-in into the f1-Hz frequency band ends, the wireless terminal performs level measurement of f1-Hz-band signals. The control unit 121 then switches the receiving frequencies of the RFs 102 and 112 to the f2-Hz frequency band so that f2-Hz-band signals can be received. After pulling-in into the f2-Hz frequency band ends, the wireless terminal performs level measurement of f2-Hz-band signals.

In the next standby level measurement zone E102, level measurement in the f1-Hz frequency band and level measurement in the f2-Hz frequency band are performed in the same way.

The conventional wireless terminal performs pulling-in into the same frequency in the two receiving branches A and B and performs level measurement in the standby level measurement zones E101 and E102, as described above. In the standby level measurement zone E101, level measurement in the f1-Hz band and level measurement in the f2-Hz band are performed along the two receiving branches A and B, as indicated by double-headed arrows F101 and F103 and double-headed arrows F102 and F104 respectively in FIG. 13. In the standby level measurement zone E102, level measurement in the f1-Hz band and level measurement in the f2-Hz frequency band are performed along the two receiving branches A and B, as indicated by double-headed arrows F105 and F107 and double-headed arrows F106 and F108 respectively in FIG. 13.

A wireless apparatus which contains a diversity unit and performs normal reception in one receiving branch while performing signal measurement in another receiving branch has already been provided (refer to patent document 1, for instance).

Patent document 1: Japanese PCT application translation Publication No. 2002-500837

### Disclosure of Invention

### Problems to Be Solved by the Invention

The conventional wireless terminal can perform level measurement in just one single frequency band in a single gap zone in the compressed mode. Since there are not many sampling points for level measurement, a movement of the wireless terminal can result in a difference from an actual value of level measurement.

For example, in the example shown in FIG. 12, the wireless terminal performs level measurement in the f1-Hz frequency band in the gap zone C101 in the compressed mode. If the wireless terminal moves after that, the result of level measurement in the f1-Hz frequency band in the place to which the wireless terminal has moved may be different.

Since measurement is performed for a single frequency band in each time division, if level measurement in a plurality of frequency bands is performed in the standby level measurement zone, the measurement time becomes long, increasing the consumed current in the standby state.

In the example shown in FIG. 13, the wireless terminal performs level measurement in the f1-Hz and f2-Hz frequency bands in different time divisions in the standby level measurement zone E101. This increases the measurement time in the standby level measurement zone E101.

In view of the foregoing, the present invention has been made. It is an object of the present invention to provide a wireless terminal that can suppress a difference from the actual value of level measurement, which could be caused by a movement of the wireless terminal, and can reduce the level measurement time in a standby level measurement zone.

### Means to Solve the Problems

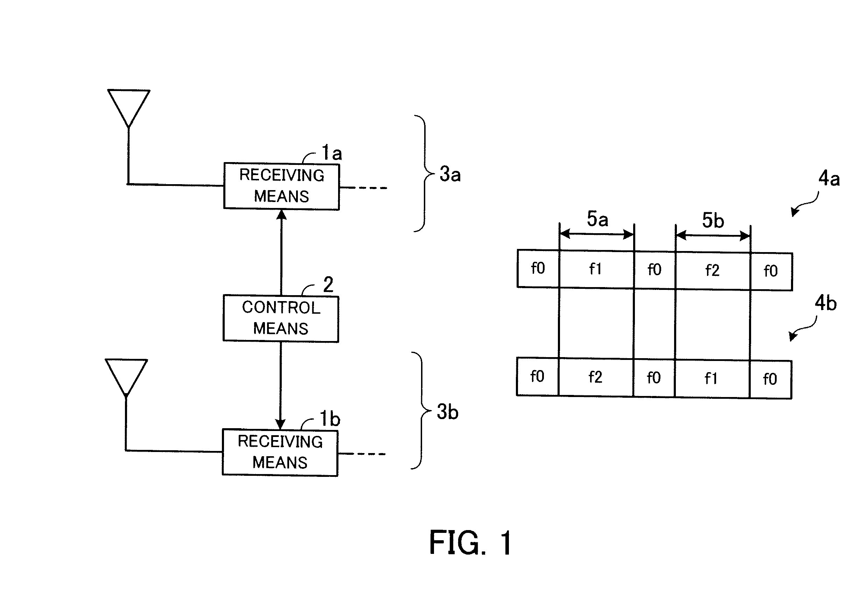

To solve the above described problems, the present invention provides a wireless terminal which performs wireless communication with a base station and has a diversity function, such as that shown in FIG. 1. This wireless terminal includes receiving means 1a and 1b provided for receiving branches 3a and 3b respectively, the receiving means 1a and 1b capable of receiving radio signals of a plurality of frequencies, and control means 2 for controlling the receiving means 1a and 1b to receive radio signals of different frequencies f1 and f2 respectively in gap zones 5a and 5b in a compressed mode.

This type of wireless terminal receives radio signals of different frequencies f1 and f2 in the gap zones 5a and 5b in the compressed mode. This increases sampling points of level measurement to be calculated on the basis of received radio signals.

According to the present invention, the control means controls the receiving means to receive radio signals of different frequencies in a standby level measurement zone.

This makes it possible to perform level measurement in different frequencies in the standby level measurement zone.

### Advantages of the Invention

A wireless terminal of the present invention receives radio signals of different frequencies in a gap zone in a compressed mode. Since this increases the sampling points of level measurement to be calculated on the basis of received radio signals, the difference from the actual value of level measurement, which could be caused by a movement of the wireless terminal, can be suppressed.

In the standby level measurement zone, signals of different frequencies are received. Therefore, the level measurement time in the standby level measurement zone is reduced.

The above and other objects, features and advantages of the present invention will become apparent from the following description when taken in conjunction with the accompanying drawings which illustrate preferred embodiments of the present invention by way of example.

### Brief Description of Drawings

FIG. 1 is a diagram giving an outline of a wireless terminal.
FIG. 2 is a block diagram showing the configuration of a wireless terminal having a diversity function.
FIG. 3 is a diagram illustrating the operation of the wireless terminal in level measurement in a compressed mode.
FIG. 4 is a diagram illustrating the operation of level measurement in different frequency bands in different communication systems.
FIG. 5 is a diagram illustrating the operation of level measurement in different frequency bands in different communication systems.
FIG. 6 is a diagram illustrating the operation of the wireless terminal in level measurement in a standby state.
FIG. 7 is a diagram illustrating the operation in level measurement in different communication systems.
FIG. 8 is a diagram illustrating the operation in level measurement in different frequency bands in different communication systems.
FIG. 9 is a flowchart showing the operation of the wireless terminal in a gap zone in a compressed mode.
FIG. 10 is a flowchart showing the operation of the wireless terminal in a standby level measurement zone.
FIG. 11 is a block diagram showing the configuration of a wireless terminal having a conventional diversity function.
FIG. 12 is a diagram illustrating the operation of the wireless terminal in level measurement.
FIG. 13 is a diagram illustrating the operation of the wireless terminal in level measurement in a standby state.

### Best Mode for Carrying Out the Invention

The principles of the present invention will be described in detail with reference to the drawings.

FIG. 1 is a diagram giving an outline of a wireless terminal. As shown in FIG. 1, the wireless terminal includes receiving means 1a and 1b and control means 2. The figure also shows frequency transitions 4a and 4b indicating how the frequencies of the radio signals received by the receiving means 1a and 1b change.

The wireless terminal conducts wireless communication with a base station, which is not shown in FIG. 1. The wireless terminal has a diversity function and includes receiving branches 3a and 3b. The wireless terminal combines the radio signals received in the receiving branches 3a and 3b to improve the sensitivity of the wireless communication.

The receiving means 1a and 1b are provided in the receiving branches 3a and 3b respectively. The receiving means 1a and 1b can receive radio signals of different frequencies. For example, the receiving means 1a and 1b can receive radio signals of frequencies f0, f1, and f2.

The control means 2 controls the receiving means 1a and 1b to receive radio signals of different frequencies in a gap zone in a compressed mode.

The operation of the wireless terminal will be described below.

The control means 2 controls the receiving means 1a and 1b to receive radio signals of the frequency f0 in a communication state, as indicated by the frequency transitions 4a and 4b in FIG. 1. In the receiving branches 3a and 3b, radio signals of the frequency f0 are received, and the diversity function enables communication of good reception sensitivity.

As the frequency transitions 4a and 4b show, the control means 2 controls the receiving means 1a and 1b to receive radio signals of the frequencies f1 and f2 respectively in a gap zone 5a in the compressed mode. The wireless terminal then performs level measurement at the frequencies f1 and f2.

After the level measurement in the gap zone 5a in the compressed mode ends, the control means 2 returns the frequency to f0, as indicated by the frequency transitions 4a and 4b.

In the next gap zone 5b in the compressed mode, the control means 2 controls the receiving means 1a and 1b to receive radio signals of the frequencies f1 and f2 respectively, as indicated by the frequency transitions 4a and 4b.

In the conventional apparatus, the two receiving means 1a and 1b receive radio signals of the frequency f1 in the gap zone 5a and radio signals of the frequency f2 in the gap zone 5b. In contrast, in the wireless terminal shown in FIG. 1, the receiving means 1a and 1b receive radio signals of the frequencies f1 and f2 respectively in the gap zone 5a and radio signals of the frequencies f1 and f2 respectively in the gap zone 5b. This increases the sampling points for level measurement at the frequencies f1 and f2 in the gap zones 5a and 5b, making it possible to suppress a difference from the actual value of level measurement, which could be caused by a movement of the wireless terminal.

As described above, the communication apparatus receives signals having different frequencies in the gap zone in the compressed mode. This increases sampling points of level measurement to be calculated on the basis of received radio signals, making it possible to suppress a difference from the actual value of level measurement, which could be caused by a movement of the wireless terminal.

In a level measurement zone in the standby state of the wireless terminal, the control means 2 controls the receiving means 1a and 1b to receive radio signals of different frequencies.

For example, let the gap zones 5a and 5b in FIG. 1 be level measurement zones A and B in the standby state. Then, the control means 2 controls the receiving means 1a and 1b to receive radio signals of different frequencies f1 and f2 in the level measurement zone A and to receive radio signals of different frequencies f1 and f2 in the level measurement zone B.

In the conventional apparatus, radio signals of frequencies f1 and f2 are received in different time divisions in the standby level measurement zone E101, as illustrated in FIG. 13. In contrast, in the wireless terminal shown in FIG. 1, the receiving means 1a and 1b receive radio signals of different frequencies f1 and f2 in the level measurement zone A. Therefore, the level measurement time in the level measurement zones A and B in the standby state can be reduced.

An embodiment of the present invention will be described below in detail with reference to the drawings.

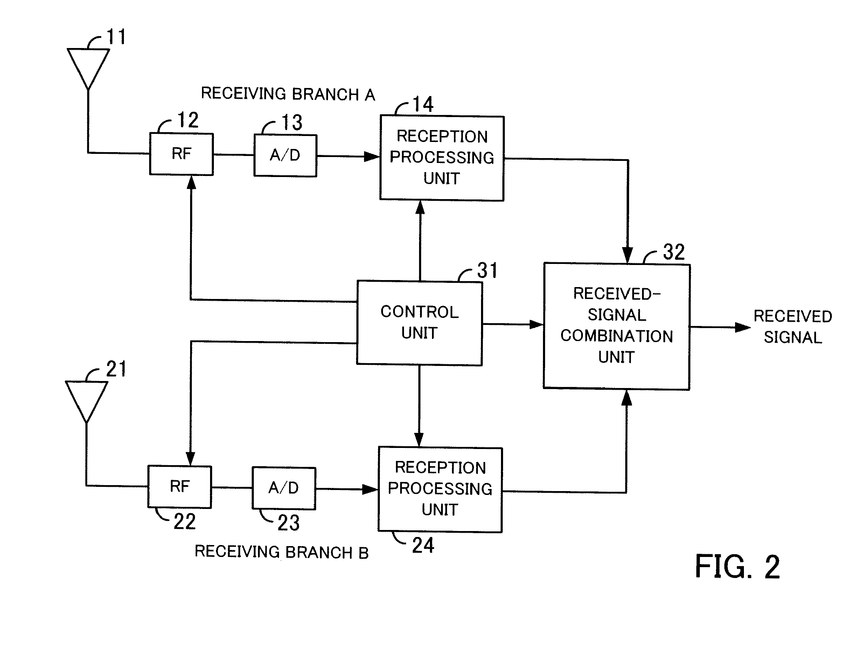

FIG. 2 is a block diagram showing the configuration of a wireless terminal having a diversity function. As shown in FIG. 2, the wireless terminal has antennas 11 and 21, RFs (radio frequency units) 12 and 22, A/Ds (analog-to-digital converters) 13 and 23, reception processing units 14 and 24, a control unit 31, and a received-signal combination unit 32. The shown wireless terminal can be a mobile telephone, for instance, and performs wireless communication with a base station. A combination of the antenna 11, the RF 12, the A/D 13, and the reception processing unit 14 is called a receiving branch A. A combination of the antenna 21, the RF 22, the A/D 23, and the reception processing unit 24 is called a receiving branch B.

The RFs 12 and 22 receive radio signals of predetermined frequencies among radio signals received by the antennas 11 and 21.

The A/Ds 13 and 23 convert the analog radio signals received by the RFs to digital signals.

The reception processing units 14 and 24 perform reception processing for the signals output from the A/Ds 13 and 23 in accordance with the communication system used for communication between the wireless terminal and the base station. For example, the reception processing units 14 and 24 output received signals that include the measurement result of frame top timing, level measurement results such as SIR, data demodulation results, and the like. If the communication system is WCDMA, reception processing conforming to the WCDMA communication system is performed. If the communication system is GSM, reception processing conforming to the GSM communication system is performed.

The control unit 31 controls the frequencies of radio signals to be received by the RFs 12 and 22. If the wireless terminal receives radio signals in the 2-GHz band, for instance, the control unit 31 controls the RFs 12 and 22 to receive radio signals in the 2-GHz band.

The control unit 31 can control the frequencies of the RFs 12 and 22 independently of each other. For example, the RF 12 can be controlled to receive 800-MHz-band signals while the RF 22 is controlled to receive 1.7-GHz-band signals.

The control unit 31 also controls the communication system in which the reception processing units 14 and 24 perform reception processing. For example, if the wireless terminal performs communication conforming to the WCDMA communication system, the control unit 31 controls the reception processing units 14 and 24 to perform reception processing conforming to the WCDMA communication system.

The control unit 31 can control the communication systems of the reception processing units 14 and 24 independently of each other. For example, while the reception processing unit 14 uses the WCDMA communication system, the reception processing unit 24 can use the GSM communication system.

The received-signal combination unit 32 brings the received signals output from the reception processing units 14 and 24 in phase with each other and combines the signals. This means that the received-signal combination unit 32 combines the received signal of the receiving branch A and the received signal of the receiving branch B to improve the reception sensitivity of the received signal.

The operation of the wireless terminal shown in FIG. 2 in level measurement during a voice call will be described next. The wireless terminal performs level measurement at different frequencies in different communication systems in the compressed mode during a voice call.

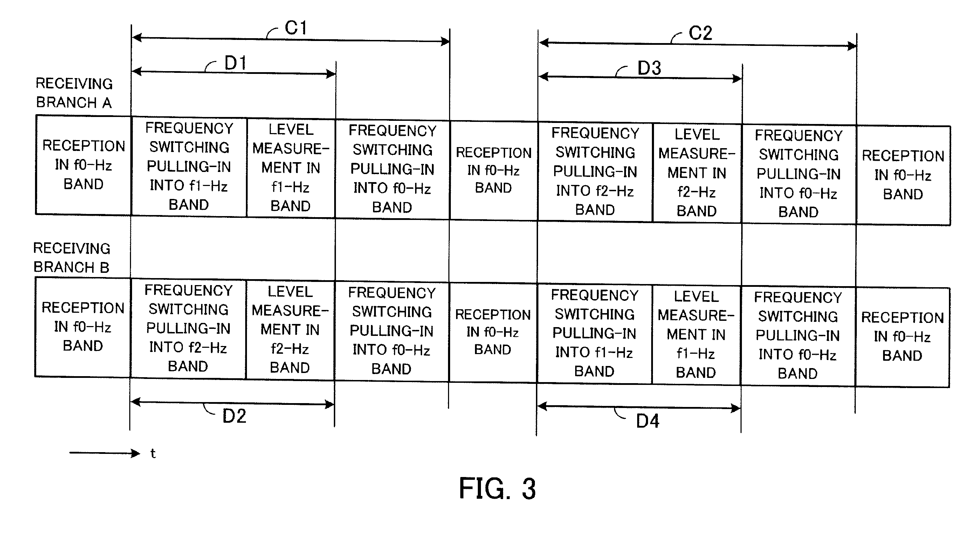

FIG. 3 is a diagram illustrating the operation of the wireless terminal in level measurement in the compressed mode. The figure shows the operation of the wireless terminal in level measurement along the receiving branch A and in level measurement along the receiving branch B. The time axis t points to the right in FIG. 3.

Suppose that the wireless terminal is in communication with a base station in an f0-Hz frequency band. In a gap zone C1 in the compressed mode shown in FIG. 3, the wireless terminal switches the receiving frequencies of the receiving branches A and B in order to perform level measurement at different frequencies.

For example, the control unit 31 switches the receiving frequency of the RF 12 to an f1-Hz frequency band to receive f1-Hz-band radio signals. The control unit 31 switches the receiving frequency of the RF 22 to an f2-Hz frequency band to receive f2-Hz-band radio signals.

When pulling-in into the f1-Hz and f2-Hz frequency bands ends in the RFs 12 and 22, the reception processing units 14 and 24 performs level measurement of signals in the f1-Hz frequency band and f2-Hz frequency band.

When the level measurement in the gap zone C1 in the compressed mode ends, the control unit 31 switches the receiving frequencies of the RFs 12 and 22 back to the f0-Hz band to restore the initial f0-Hz band, as shown in FIG. 3. The wireless terminal then performs wireless communication with the base station in the f0-Hz frequency band.

In the next gap zone C2 in the compressed mode, the control unit 31 switches the receiving frequency of the RF 22 to the f1-Hz frequency band to receive f1-Hz-band signals in the receiving branch B. The control unit 31 also switches the receiving frequency of the RF 12 to the f2-Hz frequency band so that f2-Hz-band signals can be received in the receiving branch A.

The control unit 31 controls the RFs 12 and 22 to receive radio signals of frequencies differing from those in the preceding gap zone C1, in the receiving branches A and B. After pulling-in into the f1-Hz and f2-Hz frequency bands ends, the reception processing units 14 and 24 perform level measurement of signals in the f1-Hz and f2-Hz frequency bands.

When the level measurement in the gap zone C2 in the compressed mode ends, the control unit 31 switches the receiving frequencies of the RFs 12 and 22 to the f0-Hz frequency band to restore the initial f0-Hz frequency band, as shown in FIG. 3. The wireless terminal then performs wireless communication with the base station in the f0-Hz frequency band.

The received-signal combination unit 32 averages out the level measurement of the f1-Hz frequency band in the receiving branch A in the first gap zone C1 in the compressed mode and the level measurement of the f1-Hz frequency band in the receiving branch B in the second gap zone C2 in the compressed mode to obtain a level measurement value in the f1-Hz frequency band. The received-signal combination unit 32 also averages out the level measurement of the f2-Hz frequency band in the receiving branch B in the first gap zone C1 in the compressed mode and the level measurement of the f2-Hz frequency band in the receiving branch A in the second gap zone C2 in the compressed mode to obtain a level measurement value in the f2-Hz frequency band.

If the level measurement value is greater than a predetermined value, the frequency band of wireless communication with the base station will be switched.

The wireless terminal receives radio signals in f1-Hz and f2-Hz frequency bands in the gap zone C1 in the compressed mode, as indicated by double-headed arrows D1 and D2 in FIG. 3. The wireless terminal also receives radio signals in the f1-Hz and f2-Hz frequency bands in the gap zone C2 in the compressed mode, as indicated by double-headed arrows D3 and D4 in FIG. 3. These increase sampling points of level measurement, making it possible to suppress a difference from the actual level measurement value, which could be caused by a movement of the wireless terminal.

In the first gap zone C1 in the compressed mode, f1-Hz-band signals are received in the receiving branch A, and f2-Hz-band signals are received in the receiving branch B, as indicated by the double-headed arrows D1 and D2. In the next gap zone C2 in the compressed mode, the frequency bands of the receiving branches A and B are switched around, as indicated by the double-headed arrows D3 and D4. Signals of the f2-Hz frequency band are received in the receiving branch A, and signals of the f1-Hz frequency band are received in the receiving branch B. Therefore, the level measurement values in the receiving branches A and B can be averaged out to obtain an appropriate level measurement value.

The operation of level measurement in different communication systems in gap zones in the compressed mode will be described next.

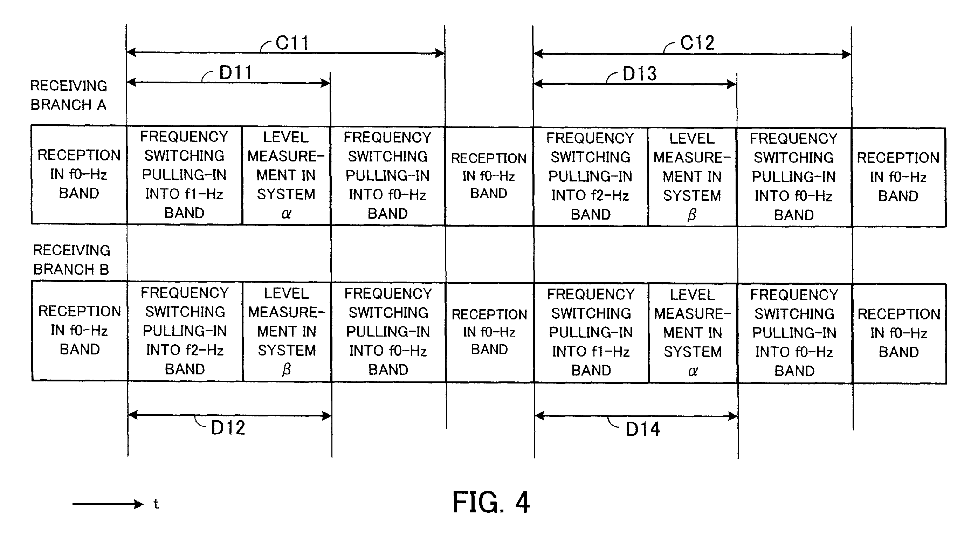

FIG. 4 is a diagram illustrating the operation in level measurement in different frequency bands in different communication systems. The figure shows the operation of the wireless terminal in level measurement along the receiving branch A and level measurement along the receiving branch B. The time axis t points to the right in FIG. 4.

Suppose that the wireless terminal is in WCDMA communication with the base station in the f0-Hz frequency band. In a gap zone C11 in the compressed mode shown in FIG. 4, the wireless terminal switches the receiving frequencies of the RFs 12 and 22 and the communication systems in which the reception processing units 14 and 24 perform reception processing, in order to carry out level measurement in different communication systems. For example, the control unit 31 controls the RF 12 to receive radio signals in the f1-Hz frequency band and the reception processing unit 14 to perform reception processing of a communication system α (system α in FIG. 4), in the receiving branch A. The control unit 31 also controls the RF 22 to receive radio signals in the f2-Hz frequency band and the reception processing unit 14 to perform reception processing of a communication system β, in the receiving branch B.

When pulling-in into the f1-Hz and f2-Hz frequency bands ends, the reception processing units 14 and 24 perform level measurement of f1-Hz-band and f2-Hz-band signals.

When the level measurement in the gap zone C11 of the compressed mode ends, the control unit 31 switches the frequency bands of the RFs 12 and 22 to restore the initial f0-Hz frequency band, as shown in FIG. 4. The communication systems of the reception processing units 14 and 24 are also switched to restore the initial WCDMA communication system. The wireless terminal then performs WCDMA wireless communication with the base station in the f0-Hz frequency band.

In the next gap zone C12 of the compressed mode, the control unit 31 controls the RF 12 and the reception processing unit 14 to receive f2-Hz-band radio signals of the communication system P in the receiving branch A. The control unit 31 also controls the RF 22 and the reception processing unit 24 to receive f1-Hz-band radio signals of the communication system α in the receiving branch B.

The control unit 31 controls the RFs 12 and 22 and the reception processing units 14 and 24 to receive radio signals differing in frequency and communication system from those received in the preceding gap zone C11 of the compressed mode, in the receiving branches A and B.

When pulling-in into the f1-Hz and f2-Hz frequency bands ends, the reception processing units 14 and 24 perform level measurement of f1-Hz-band and f2-Hz-band signals.

When the level measurement in the gap zone C12 in the compressed mode is completed, the control unit 31 switches the frequency bands of the RFs 12 and 22 to restore the initial f0-Hz frequency band, as shown in FIG. 4. The control unit 31 also switches the communication systems of the reception processing units 14 and 24 to restore the initial WCDMA system. The wireless terminal then performs WCDMA wireless communication with the base station in the f0-Hz frequency band.

Because different communication systems are used in the gap zones C11 and C12 in the compressed mode, as indicated by double-headed arrows D11 and D12 and double-headed arrows D13 and D14, the sampling points of level measurement increase, making it possible to suppress any difference from the actual level measurement value, which could be caused by a movement of the wireless terminal.

The operation in level measurement in different frequency bands in different communication systems in the gap zone of the compressed mode will be described next.

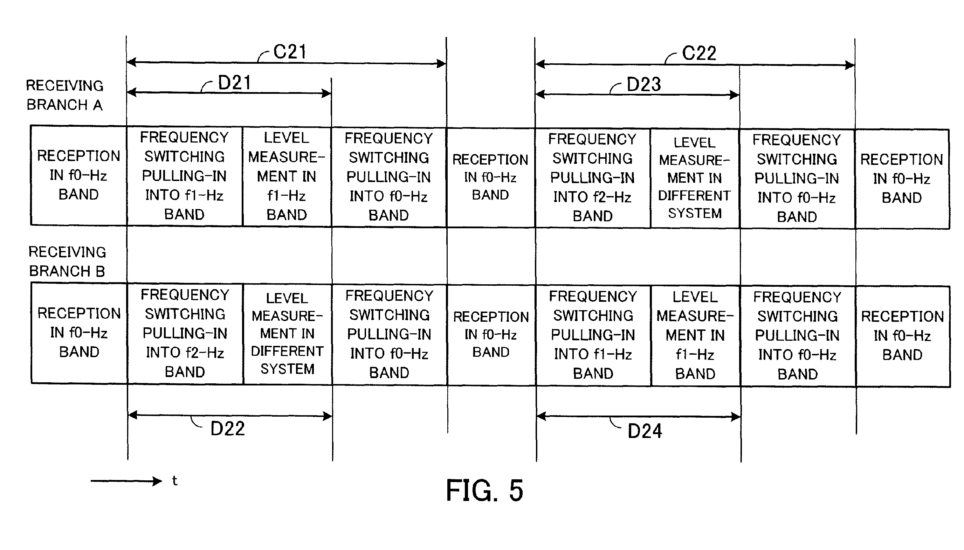

FIG. 5 is a diagram illustrating the operation in level measurement in different frequency bands in different communication systems. The figure shows the operation of the wireless terminal in level measurement along the receiving branch A and level measurement along the receiving branch B. The time axis t points to the right in FIG. 5.

Suppose that the wireless terminal is in WCDMA communication in the f0-Hz frequency band. In a gap zone C21 in the compressed mode shown in FIG. 5, the wireless terminal switches the frequency band of the receiving signal from f0 Hz to f1 Hz while leaving the communication system unchanged in the receiving branch A. In the receiving branch B, the frequency band of the receiving signal is switched from f0 Hz to f2 Hz, and the communication system is switched from WCDMA to another system.

For example, the control unit 31 controls the RF 12 to receive f1-Hz-band radio signals in the receiving branch A. Because the communication system in the receiving branch A is not changed, the communication system of the reception processing unit 14 is not switched.

In the receiving branch B, the control unit 31 controls the RF 22 to receive f2-Hz-band radio signals and controls the reception processing unit 14 to perform reception processing of a communication system differing from WCDMA.

When the level measurement ends in the receiving branches A and B, the control unit 31 switches the frequency bands of the RFs 12 and 22 and the communication system of the reception processing unit 24 to restore the initial WCDMA communication system and f0-Hz frequency band, as shown in FIG. 5. The wireless terminal then performs WCDMA wireless communication with a base station in the f0-Hz frequency band.

In the next gap zone C22 in the compressed mode, the control unit 31 controls the RF 22 to receive f1-Hz-band radio signals in the receiving branch B. The control unit 31 also controls the RF 12 and the reception processing unit 14 to receive f2-Hz-band radio signals in a non-WCDMA communication system in the receiving branch A.

The control unit 31 controls the RFs 12 and 22 and the reception processing units 14 and 24 to receive radio signals differing in frequency and communication system from those in the preceding gap zone C12 in the compressed mode, in the receiving branches A and B.

When the level measurement is completed in the gap zone C22 in the compressed mode, the control unit 31 controls the RFs 12 and 22 and the reception processing units 14 and 24 to restore the initial f0-Hz frequency band and the WCDMA communication system. The wireless terminal then performs WCDMA wireless communication with the base station in the f0-Hz frequency band.

In the level measurement in different frequency bands in different communication systems, the sampling points increase as indicated by double-headed arrows D21 and D22 and double-headed arrows D23 and D24, making it possible to suppress a difference from the actual level measurement value, which could be caused by a movement of the wireless terminal.

The operation of the wireless terminal in level measurement in the standby state will be described next.

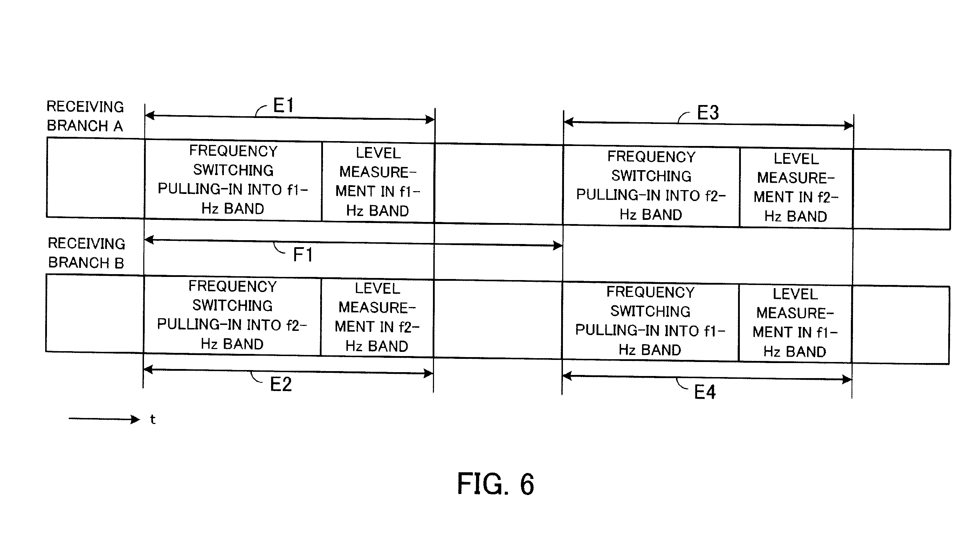

FIG. 6 is a diagram illustrating the operation of the wireless terminal in level measurement in the standby state. The figure shows the operation of the wireless terminal in level measurement along the receiving branch A and in level measurement along the receiving branch B. The time axis t points to the right in FIG. 6.

When communication with the base station starts, the wireless terminal communicates with the base station in the f0-Hz frequency band. In standby level measurement zones E1 and E2 shown in FIG. 6, the wireless terminal switches receiving frequencies in the receiving branches A and B for level measurement in different frequencies.

For example, the control unit 31 switches the receiving frequency of the RF 12 to the f1-Hz frequency band so that f1-Hz-band signals can be received. The control unit 31 also switches the receiving frequency of the RF 22 to the f2-Hz frequency band so that f2-Hz-band signals can be received.

When pulling-in into the f1-Hz and f2-Hz frequency bands ends, the reception processing units 14 and 24 perform level measurement of signals in the f1-Hz and f2-Hz frequency bands.

In next standby level measurement zones E3 and E4, the control unit 31 switches the receiving frequency of the RF 22 to the f1-Hz frequency band so that f1-Hz-band signals can be received in the receiving branch B. The control unit 31 also switches the receiving frequency of the RF 12 to the f2-Hz frequency band so that f2-Hz-band signals can be received in the receiving branch A.

The control unit 31 controls the RFs 12 and 22 to receive radio signals differing in frequency from those received in the preceding standby level measurement zones E1 and E2, in the receiving branches A and B.

Because level measurement in two different frequency bands is performed in one session in the standby level measurement zones E1 and E2 and the standby level measurement zones E3 and E4, the level measurement time is reduced.

In the first standby level measurement zones E1 and E2, signals of the f1-Hz frequency band are received in the receiving branch A, and signals of the f2-Hz frequency band are received in the receiving branch B. In the next standby level measurement zones E3 and E4, the frequency bands in the receiving branches A and B are switched around to receive signals of the f2-Hz frequency band in the receiving branch A and to receive signals in the f2-Hz frequency band in the receiving branch B. Accordingly, level measurement values in the receiving systems can be averaged out to obtain an appropriate level measurement value.

A double-headed arrow F1 in FIG. 6 represents the cycle of the standby level measurement period. In the WCDMA system, the cycle of the standby level measurement period is 2.56 seconds.

The operation in level measurement in different communication systems in the standby level measurement zone will be described next.

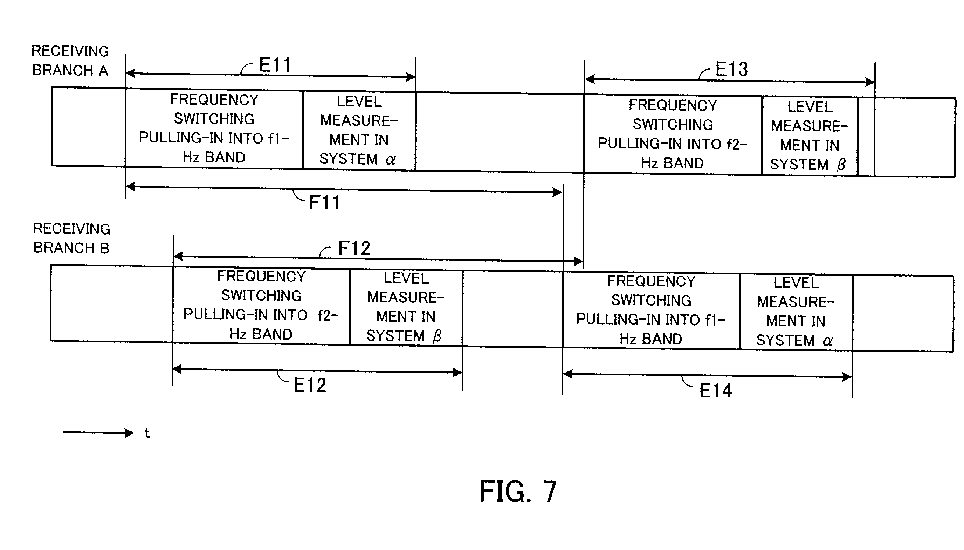

FIG. 7 is a diagram illustrating the operation in level measurement in different communication systems. The figure shows the operation of the wireless terminal in level measurement along the receiving branch A and level measurement along the receiving branch B. The time axis t points to the right in FIG. 7.

Suppose that the wireless terminal is using the WCDMA communication system and performs WCDMA communication with the base station when a voice call starts. In standby level measurement zones E11 and E12 shown in FIG. 7, the wireless terminal switches the receiving frequencies of the RFs 12 and 22 and the communication systems in which reception processing is performed by the reception processing units 14 and 24, to perform level measurement in different communication systems.

The control unit 31 controls the RF 12 to receive f1-Hz-band radio signals in the receiving branch A and controls the reception processing unit 14 to perform reception processing of the communication system α, for instance. In the receiving branch B, the control unit 31 controls the RF 22 to receive f2-Hz-band radio signals and the reception processing unit 14 to perform reception processing of the communication system β.

In the next standby level measurement zones E13 and E14, the control unit 31 controls the RF 22 and the reception processing unit 24 to receive f1-Hz-band radio signals in the communication system α in the receiving branch B. In the receiving branch A, the control unit 31 controls the RF 12 and the reception processing unit 14 to receive f2-Hz-band radio signals in the communication system β.

The control unit 31 controls the RFs 12 and 22 and the reception processing units 14 and 24 to receive radio signals differing in communication system from those received in the preceding standby level measurement zones E11 and E12, in the receiving branches A and B.

Different communication systems have different standby reception cycles. As indicated by double-headed arrows F11 and F12 in FIG. 7, the standby level measurement cycle of the communication system α may differ from the standby level measurement time of the communication system β.

Even if level measurement in different communication systems is performed, the level measurement time can be reduced.

The operation in level measurement in different frequency bands in different communication systems in standby level measurement zones will be described next.

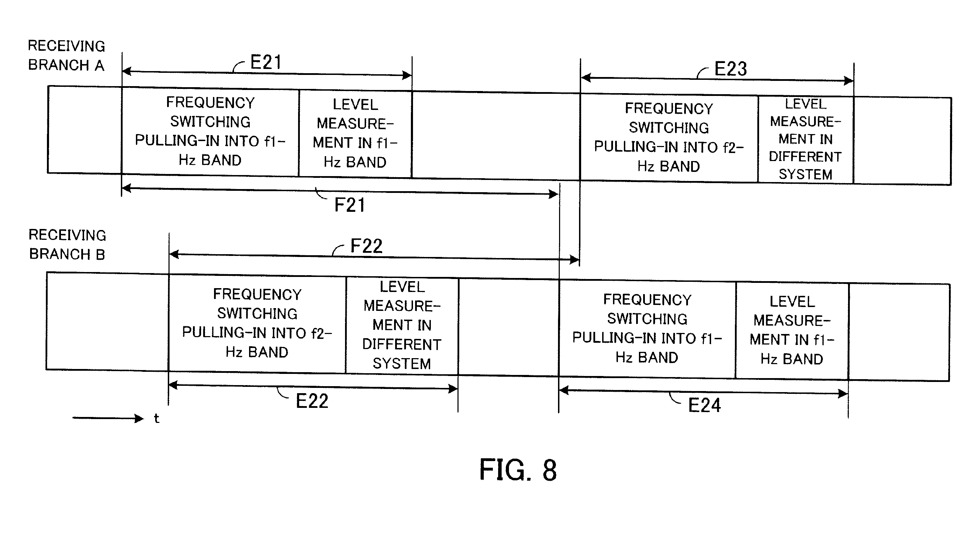

FIG. 8 is a diagram illustrating the operation in level measurement in different frequency bands in different communication systems. The figure shows the operation of the wireless terminal in level measurement along the receiving branch A and level measurement along the receiving branch B. The time axis t points to the right in FIG. 8.

Suppose that the wireless terminal is using the WCDMA communication system and performs WCDMA communication with the base station when it starts a voice call. In the receiving branch A, in a standby level measurement zone E21 shown in FIG. 8, the wireless terminal performs level measurement in the WCDMA communication system in a frequency band differing from the current frequency band. In the receiving branch B, in a standby level measurement zone E22 shown in FIG. 8, the wireless terminal performs level measurement in a non-WCDMA communication system.

For example, the control unit 31 controls the RF 12 to receive f1-Hz-band radio signals in the receiving branch A. The communication system of the reception processing unit 14 is not switched, because the communication system is left unchanged in the receiving branch A.

In the receiving branch B, the control unit 31 controls the RF 22 to receive f2-Hz-band radio signals and controls the reception processing unit 14 to perform reception processing of the non-WCDMA communication system.

In the next standby level measurement zone E23 in the receiving branch A, the control unit 31 controls the RF 12 and the reception processing unit 14 to receive f2-Hz-band radio signals in the non-WCDMA communication system. In a standby level measurement zone E24 in the receiving branch B, the control unit 31 controls the RF 12 to receive f1-Hz-band radio signals.

The control unit 31 controls the RFs 12 and 22 and the reception processing units 14 and 24 to receive radio signals differing in frequency and communication system from those received in the preceding standby level measurement zone E21, in the receiving branch A and the receiving branch B.

A double-headed arrow F21 represents the WCDMA standby level measurement cycle. The WCDMA standby level measurement cycle is 2.56 seconds. A double-headed arrow S22 represents the standby level measurement cycle of the different system.

Even in level measurement in different frequency bands in different communication systems, the level measurement time can be reduced.

The operation of the wireless terminal will next be described below with reference to flowcharts.

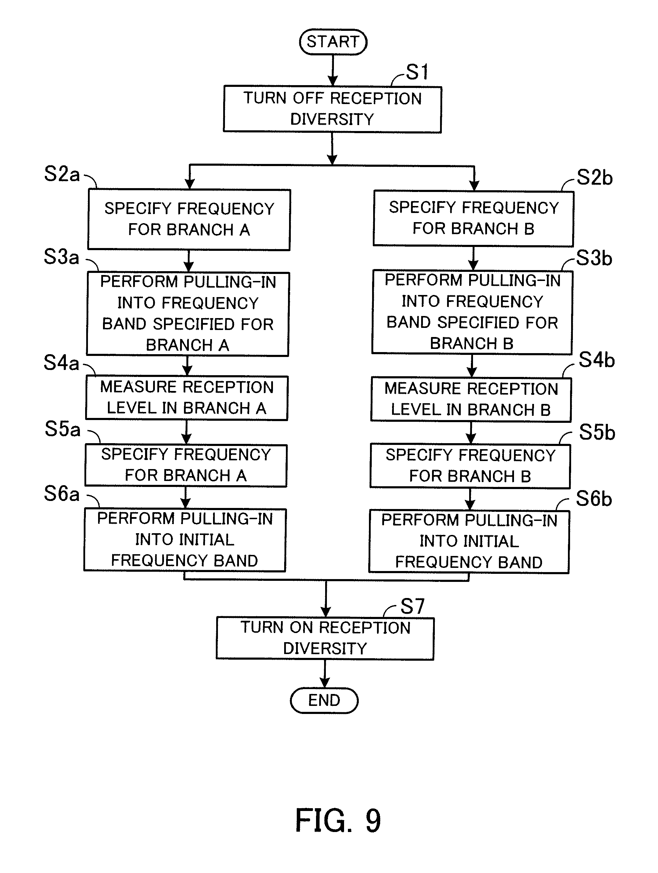

FIG. 9 is a flowchart showing the operation of the wireless terminal in a gap zone in the compressed mode. The wireless terminal executes the following processing at predetermined timing, gap length, and gap intervals, as requested from the base station, for instance.

Step S1: The wireless terminal turns off the reception diversity function.

Steps S2a and S3a: The wireless terminal specifies different frequencies for level measurement. The wireless terminal specifies different frequency bands in the receiving branches A and B (branches A and B in FIG. 9).

Steps S3a and S3b: The wireless terminal performs pulling-in into the specified frequency bands.

Steps S4a and S4b: When pulling-in into the frequency bands is completed, the wireless terminal performs level measurement in the receiving branches A and B.

Steps S5a and S5b: The wireless terminal specifies frequencies to restore the frequency band used in a voice call (initial frequency band).

Steps S6a and S6b: The wireless terminal applies pulling-in to radio signals of the receiving frequencies into the initial frequency band.

Step S7: The wireless terminal turns on the reception diversity function. Then, the radio signals are received by means of the diversity function.

In the next gap zone in the compressed mode, the receiving frequencies are switched between the receiving branch A and the receiving branch B. The flowchart does not show the operation to perform level measurement in different communication systems. To do that, the terminal switches the communication system in which reception processing is performed as well as specifying the frequency of the signal to be received.

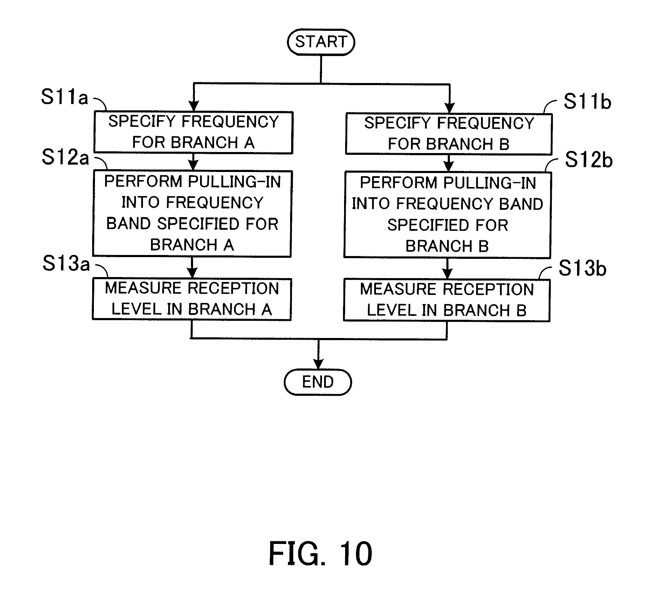

FIG. 10 is a flowchart showing the operation of the wireless terminal in a standby level measurement zone. If software gives the wireless terminal an instruction to report the level measurement result at intervals of five seconds, for instance, the terminal executes the following processing periodically accordingly.

Steps S11a and 11b: The wireless terminal specifies different frequencies for level measurement. The wireless terminal specifies different frequency bands for the receiving branches A and B (branches A and B in FIG. 10).

Steps S12a and S12b: The wireless terminal performs pulling-in into the specified frequency bands.

Steps S13a and S13b: The wireless terminal performs level measurement in the receiving branches A and B.

In the next standby level measurement zone, the receiving frequencies of the receiving branch A and the receiving branch B are switched around. The flowchart does not show the operation to perform level measurement in different communication systems. To do that, the terminal switches the communication system in which reception processing is performed as well as specifying the frequency of the signal to be received.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Symbols

- 1a, 1b:: Receiving means
- 2:: Control means
- 3a, 3b:: Receiving branches
- 4a, 4b:: Frequency transitions
- 5a, 5b:: Gap zones

## Claims

1. A wireless terminal which performs wireless communication with a base station and has a diversity function, the wireless terminal comprising:
receiving means individually provided for a plurality of receiving branches, the receiving means capable of receiving radio signals of a plurality of frequencies; and
control means for controlling the receiving means to receive radio signals of different frequencies in a gap zone in a compressed mode.

2. The wireless terminal according to claim 1,
wherein the control means controls the receiving means in the next gap zone, to receive radio signals differing in frequency from those received in the gap zone.

3. The wireless terminal according to claim 1, further comprising:
reception processing means provided in association with the receiving means, for performing reception processing of the radio signals received by the receiving means, in a plurality of communication systems,
wherein the control means controls the reception processing means to perform reception processing in different communication systems in the gap zone.

4. The wireless terminal according to claim 3,
wherein the control means controls the reception processing means in the next gap zone to perform reception processing in communication systems differing from the communication systems used in the gap zone.

5. The wireless terminal according to claim 1,
wherein the control means controls the receiving means to receive radio signals of different frequencies in a level measurement zone in a standby state.

6. The wireless terminal according to claim 1,
wherein the control means controls the receiving means in the next level measurement zone, to receive radio signals of frequencies differing from the frequencies received in the level measurement zone.

7. The wireless terminal according to claim 1, further comprising:
reception processing means provided in association with the receiving means, for performing reception processing of the radio signals received by the receiving means, in a plurality of communication systems,
wherein the control unit controls the reception processing means in the level measurement zone, to perform reception processing in different communication systems.

8. The wireless terminal according to claim 7,
wherein the control means controls the reception processing means in the next level measurement zone, to perform reception processing in communication systems differing from the communication systems used in the level measurement zone.
